# EUROPÄISCHE PATENTSCHRIFT

(11) **EP 1 210 274 B1**
(45) Veröffentlichungstag und Bekanntmachung des Hinweises auf die Patenterteilung: **28.05.2003**
(21) Anmeldenummer: 00967546.3
(22) Anmeldetag: 06.09.2000
(51) Int. Cl.: B65D 21/02, B65D 67/02, B62J 9/00

(54) **HAKENELEMENT**
HOOK ELEMENT
CROCHET

(30) Priorität: 08.09.1999 DE 19942755
(43) Veröffentlichungstag der Anmeldung: 05.06.2002
(73) Patentinhaber: NUTTO, Uwe, 79106 Freiburg (DE); John, Melanie, 79106 Freiburg (DE)
(72) Erfinder: NUTTO, Uwe, 79106 Freiburg (DE); John, Melanie, 79106 Freiburg (DE)
(74) Vertreter: Zimmermann, Günter, Dr.
(86) Internationale Anmeldenummer: DE0003090
(87) Internationale Veröffentlichungsnummer: WO01017867

(56) Entgegenhaltungen:
- WO-A-98/14381

## Beschreibung

Die Erfindung bezieht sich auf ein Hakenelement zur lösbaren Verbindung von zwei Gegenständen miteinander mit einem ersten Hakenschenkel und einem zweiten Hakenschenkel, welche über einen Hakenbogen verbunden sind, wobei im Bereich des Hakenbogens eine seitliche Ausnehmung vorgesehen ist.

Ein derartiges Hakenelement ist durch die WO-A-98/14381 (PCT/EP97/05363) bekannt und wird zum Anhängen von Fahrradtaschen an einem Gepäckträger verwendet. Durch die seitliche Ausnehmung ist dem Hakenelement im Bereich des Hakenbogens Material entnommen, so daß zwei identische Hakenelemente, die an zwei gegenüberliegenden Gegenständen, wie beispielsweise an den genannten Fahrradtaschen, befestigt sind, ineinandergeschoben werden können. Beim Anheben der Fahrradtaschen wird die Last dann gleichmäßig auf beide Hakenelemente verteilt.

Beim Verbinden zweier Gegenstände mit den bekannten Hakenelementen ist es jedoch nachteiligerweise erforderlich, daß die Hakenelemente im wesentlichen horizontal und mit großer Sorgfalt eingeführt werden müssen. Anderenfalls kann es zu einem gegenseitigen Blockieren der Hakenelemente kommen.

Die Aufgabe der Erfindung wird somit darin gesehen, das bekannte Hakenelement derart weiterzuentwickeln, daß eine Verbindung von zwei Gegenständen mittels zwei oder mehrerer Hakenelemente in einfacher Weise ermöglicht wird.

Die Aufgabe wird erfindungsgemäß bei einem Hakenelement gemäß dem Oberbegriff des Anspruchs 1 dadurch gelöst, daß mindestens ein Hakenschenkel eine Anlaufschräge aufweist.

Durch die Anlaufschräge ist es nicht mehr erforderlich, daß bei der Verbindung zweier Gegenstände die Hakenelemente sorgfältig ineinander eingeführt werden müssen. Vielmehr gestattet es die Anlaufschräge, daß die Hakenelemente sowohl in horizontaler Richtung wie auch in vertikaler Richtung gegeneinander verwinkelt eingeführt werden können. Es ist sogar möglich, zwei Hakenelemente um 90° versetzt zueinander zusammenzufügen und dann mittels einer kreisförmigen Schwenkbewegung um 90° die beiden Hakenelemente zusammenzuführen. Dies hat insbesondere den Vorteil, daß die Hakenelemente nicht mehr mit der bisher erforderlichen geringen Toleranz an den immer gleichen Stellen an den Gegenständen angebracht sein müssen. Hierdurch wird die Herstellung der mit den Hakenelementen versehenen Gegenständen wie beispielsweise den Fahrradtaschen vereinfacht, da nun das Einführen der Hakenelemente ineinander durch die Anlaufschrägen erheblich erleichtert wird.

Es ist denkbar, nur einen Teil einer Vorderkante eines Hakenschenkels mit der Anlaufschräge zu versehen. Je größer die Fläche der Anlaufschräge ist, desto einfacher wird das Zusammenfügen zweier Hakenelemente. Eine Ausführungsform der Erfindung sieht deshalb vor, daß sich die Anlaufschräge von der Außenseite bis zur Innenseite des mindestens einen Hakenschenkels erstreckt. Zweckmäßigerweise verläuft die Anlaufschräge entlang der Vorderkante über die gesamte Länge des mindestens einen Hakenschenkels.

Das Zusammenfügen zweier Hakenelemente wird weiter erleichtert, wenn auch der andere Hakenschenkel eine Anlaufschräge aufweist. Eine weitere Ausführungsform der Erfindung sieht deshalb vor, daß der erste Hakenschenkel und der zweite Hakenschenkel je eine Anlaufschräge aufweisen.

Bei dem um 90° versetzten Zusammenfügen von zwei Hakenelementen kommt es bei der anschließenden Schwenkbewegung zu Abrieben an den sich gegenseitig berührenden Kanten oder Flächen. Eine weitere Ausführungsform der Erfindung sieht deshalb vor, daß an einer Unterkante des Hakenbogens eine Rundung vorgesehen ist. Durch diese Rundung wird die Kreisbewegung oder Schwenkbewegung zusätzlich erleichtert. Bei zwei zusammengefügten Hakenelementen ist somit ein Hakenelement vor Abrieb geschützt. Damit auch bei dem zweiten Hakenelement die Schwenkbewegung erleichtert wird und kein Abrieb erfolgt, sieht eine weitere Ausführungsform der Erfindung vor, daß eine Oberkante eines Hakenschenkels im Bereich des Hakenbogens eine Abrundung aufweist.

Sind zwei Hakenelemente zusammengefügt, so sollten sie möglichst wenig seitliches Spiel aufweisen. Eine Weiterbildung der Erfindung sieht daher vor, daß der Hakenbogen eine Anlaufkante aufweist, welche sich von außen her bis zur Mitte des Hakenbogens erstreckt. Beim Zusammenfügen der beiden Hakenelemente gleiten diese insbesondere bei der Schwenkbewegung gegenseitig an den Anlaufkanten entlang, bis sie in einer Endstellung nach dem Zusammenfügen in etwa bündig im Bereich der Hakenbögen aneinanderliegen.

Das Hakenelement kann mittels Nieten oder Schrauben an einem Behältnis wie beispielsweise einer Fahrradtasche befestigt sein. Dadurch ist jedoch die Lage des Hakenelementes definiert. Um eine Verstellmöglichkeit der Lage des Hakenelementes zu erreichen, sieht eine weitere Ausführungsform der Erfindung vor, daß an dem einen Hakenschenkel, insbesondere im Bereich seiner Außenseite, zwei sich gegenüberliegende Nuten zum Befestigen des Hakenelementes an einem Behältnis vorgesehen sind. Das Hakenelement wird beim Anbringen mittels der Nuten auf eine Führungsschiene aufgeschoben, welche an dem Behältnis befestigt ist, und kann dann über einen zusätzlichen Riegel, welcher beispielsweise an der Führungsschiene angeordnet ist, arretiert werden. Damit ist eine Verstellbarkeit der Position des Hakenelementes je nach Anordnung der Führungsschiene beispielsweise in horizontaler Richtung oder vertikaler Richtung an dem Behältnis gewährleistet.

Beim Zusammenfügen zweier Hakenelemente sollen die beiden Hakenelemente bündig aneinander liegen und somit insgesamt möglichst wenig Platz beanspruchen. Hierzu ist vorteilhafterweise an einem Hakenschenkel eine Aufnahmeöffnung zur Aufnahme eines Hakenschenkels eines zweiten Hakenelementes vorgesehen. Damit dieses Zusammenfügen zweier Hakenelemente auch im Rahmen einer Schwenkbewegung problemlos gewährleistet ist, wobei die Hakenelemente unter einem Winkel bis zu 90 ° zusammengefügt werden können, sieht eine Weiterbildung der Erfindung vor, daß die Oberseite und die Unterseite der Aufnahmeöffnung in Steckrichtung des Hakenschenkels des zweiten Hakenelementes derart abgeschrägt sind, daß sie in Steckrichtung etwa konisch zusammenlaufen.

Die Anlaufschrägen an den beiden Hakenschenkeln erfolgten bisher so, daß sich die Anlaufschräge an dem ersten Hakenschenkel, an welchem auch die Befestigungselemente zum Befestigen des Hakenelementes an einem Behältnis angebracht sind, von der Außenseite bis zur Innenseite des ersten Hakenschenkels erstreckt. Beim zweiten Hakenschenkel erstreckt sich die Anlaufschräge von der Innenseite bis zur Außenseite des zweiten Hakenschenkels. Es ist jedoch auch denkbar, daß sich die Anlaufschräge an dem ersten Hakenschenkel von seiner Innenseite zu seiner Außenseite erstreckt und an dem zweiten Hakenschenkel sich die Anlaufschräge entsprechend von seiner Außenseite zu seiner Innenseite erstreckt. Diese zweite Variante hat gegenüber der ersten Variante den erheblichen Vorteil, daß beim Zusammenfügen zweier Hakenelemente die Gesamtbreite der beiden zusammengefügten Hakenelemente geringer ist als bei der ersten Variante. Deshalb sieht eine besondere Ausführungsform der Erfindung vor, daß sich an dem zweiten Hakenschenkel die Anlaufschräge von der Außenseite des Hakenschenkels bis zu seiner Innenseite erstreckt. Zusätzlich kann nun an dem ersten Hakenschenkel die Anlaufschräge sowohl nach außen als auch nach innen für ein einfacheres Zusammenstecken der beiden Hakenelemente verlaufen, so daß sich in einer Weiterbildung der Erfindung an dem ersten Hakenschenkel die Anlaufschräge von einer Vorderkante des ersten Hakenschenkels ausgehend zur Innenseite und zur Außenseite des ersten Hakenschenkels erstreckt. Zweckmäßigerweise ist die Vorderkante des ersten Hakenschenkels abgerundet, wodurch auch bei einer Schwenkbewegung ein leichteres Zusammenfügen der beiden Hakenelernente ermöglicht wird.

Zusammengefügte Hakenelemente können durch eine einfache, entgegen der Steckrichtung laufende Bewegung wieder gelöst werden. Soll ein versehentliches Lösen der Hakenelemente vermieden werden, so ist es erforderlich, daß mindestens ein Hakenelement einen Sperriegel aufweist, welcher das Lösen verhindert. Um ein sicheres Verriegeln der beiden Hakenelemente zu gewährleisten, sieht eine weitere Ausführungsform der Erfindung vor, daß der erste Hakenschenkel einen sich unterhalb und seitlich des Hakenbogens befindlichen Schenkelabschnitt aufweist, in welchem eine Öffnung zur Aufnahme eines Riegelkopfes eines Sperriegels vorgesehen ist. In verriegeltem Zustand greift der Riegelkopf in die Öffnung ein und verhindert damit ein versehentliches Lösen, welches nur gegen den Widerstand des Sperriegels möglich ist. Werden die beiden Hakenelemente gelöst, so wird der Sperriegel in seine entriegelte Stellung bewegt. Damit der Sperriegel diese Bewegung auch ausführen kann, sieht eine weitere Ausgestaltung der Erfindung vor, daß der erste Hakenschenkel eine Ausnehmung zur Aufnahme des Sperriegels aufweist. Durch die Gestaltung der Ausnehmung, welche den Sperriegel in entriegeltem Zustand größtenteils aufnimmt, ist ein Hakenelement geschaffen, welches eine geringe Breite aufweist, da ohne die Ausnehmung erheblich mehr Platz für die Aufnahme des Sperriegels erforderlich wäre.

Um die Gesamtbreite zweier zusammengefügter Hakeneiemente weiter zu verringern, sieht eine Weiterbildung der Erfindung vor, daß der zweite Hakenschenkel an seiner Innenseite eine zusätzliche Abschrägung aufweist, welche der Öffnung des ersten Hakenschenkels etwa gegenüberliegend angeordnet ist, und von dem unteren Bereich der Innenseite bis etwa zur Oberseite des zweiten Hakenschenkels verläuft. Durch diese Abschrägung wird beim Lösen und Zusammenfügen zweier Hakenelemente genügend Platz für die Bewegung des Sperriegels des ersten Hakenelementes in seine entriegelte Stellung, also in Richtung des zweiten Hakenschenkels des zweiten Hakenelementes, geschaffen. Damit das Lösen zweier zusammengefügter Hakenelemente ohne größere Schwierigkeiten, aber doch mit einem bestimmten Widerstand, ermöglicht wird, ist vorteilhafterweise der Riegelkopf des Sperriegels etwa pyramidenförmig abgeschrägt.

Sind die Hakenelemente an beispielsweise Fahrradtaschen angeordnet, so ist es wünschenswert, daß das Verbinden zweier Fahrradtaschen mit einer einfachen Schwenkbewegung ermöglicht wird. Hierzu sieht eine weitere Ausführungsform der Erfindung vor, daß das Hakenelement zusammen mit drei weiteren Hakenelementen an einer Seitenwand eines Behältnisses angeordnet ist, wobei zwei Hakenelemente nebeneinander in gleicher Lage und zwei Hakenelemente gegenüberliegend und in ihrer Lage um 180° gegeneinander verdreht angeordnet sind.

Die Erfindung wird nachstehend anhand der Zeichnung näher erläutert. Die Zeichnung zeigt Ausführungsbeispiele der Erfindung. Hierbei stellen dar:
Fig.1: Eine Vorderansicht eines ersten Ausführungsbeispiels des Hakenelements,
Fig.2: eine perspektivische Ansicht des Hakenelements nach Fig. 1,
Fig.3: ein weiteres Ausführungsbeispiel des Hakenelements in Vorderansicht,
Fig.4: eine Draufsicht nach Fig.3,
Fig.5: ein Hakenelement nach Fig.3 mit einer Führungsschiene und
Fig.6: eine schematische Seitenansicht eines Behältnisses mit Hakenelementen gemäß dem ersten Ausführungsbeispiel.

Das erfindungsgemäße Hakenelement ist einstückig ausgebildet und weist einen Hakenbogen 1, einen ersten Hakenschenkel 2 und einen zweiten Hakenschenkel 3 auf. Insgesamt ist das Hakenelement U-förmig ausgebildet, wobei der erste Hakenschenkel 2 und der zweite Hakenschenkel 3 etwa parallel zueinander verlaufen und dazwischen ein Schlitz 4 ausgebildet ist. Im Bereich des Hakenbogens 1 ist eine seitliche Ausnehmung 5 vorgesehen. Der erste Hakenschenkel 2 weist eine Anlaufschräge 6 und ebenso weist der zweite Hakenschenkel 3 eine Anlaufschräge 7 auf. Die Anlaufschräge 6 erstreckt sich von der Vorderkante 8 der Außenseite 9 des ersten Hakenschenkels 2 schräg nach innen in Richtung des Schlitzes 4 verlaufend bis zur Innenseite 10 des ersten Hakenschenkels 2. Weiterhin erstreckt sich die Anlaufschräge 6 von einer Unterseite 11 des ersten Hakenschenkels 2 entlang der Vorderkante 8 bis zu einer Oberseite 12 des Hakenbogens 1. Durch diese mit gleichmäßiger Neigung erfolgende Abschrägung bildet sich an der Oberseite 12 des Kreisbogens 1 eine Anlaufkante 13 aus, welche von der Oberseite der Vorderkante 8 von der Außenseite 9 her nach innen verläuft bis etwa zur Mitte des Kreisbogens 1, was auch der Mitte der Breite des Schlitzes 4 entspricht. Die Anlaufkante 13 und der obere Teil der Anlaufschräge 6 bilden eine Begrenzung der Ausnehmung 5 in Richtung des ersten Hakenschenkels 2 . In Richtung des Hakenbogens 1 wird die Ausnehmung 5 durch eine Stirnfläche 14 begrenzt. Die Stirnfläche 14, welche senkrecht verläuft, weist eine bogenförmige Unterkante 15 auf, welche sich bogenförmig von dem ersten Hakenschenkel 2 bis zu dem zweiten Hakenschenkel 3 erstreckt. Die Unterkante 15 ist mit einer Rundung 16 versehen. Im Bereich des zweiten Hakenschenkels 3 wird die Ausnehmung 5 durch eine Oberkante 17 des zweiten Hakenschenkels 3 begrenzt. Die Oberkante 17 ist abgeflacht ausgebildet und verläuft schräg nach vorne und unten. Weiterhin schließt die Oberkante 17 an die Stimfläche 14 an, wobei der Übergang zwischen der Oberkante 17 und der Stimfläche 14 eine Abrundung 18 aufweist. Von der Stirnfläche 14 ausgehend verläuft auch die Anlaufschräge 7 des zweiten Hakenschenkels 3, wobei sich diese Anlaufschräge 7 von einer Außenseite 19 des zweiten Hakenschenkels 3 schräg nach oben hin bis zu der Oberkante 17 erstreckt. Die nach vorne verlaufende Oberkante 17 geht an der Vorderseite des zweiten Hakenschenkels 3 in eine Vorderkante 20 des zweiten Hakenschenkels 3 gekrümmt über, wobei die Krümmung etwa 90° beträgt. Die Vorderseite des zweiten Hakenschenkels 3 kann zur Bildung der Anlaufschräge 7 in unterschiedlich langen Bereichen abgeschrägt sein. Bei dem in der Zeichnung dargestellten Ausführungsbeispiel erstreckt sich die Anlaufschräge 7 von der Stimfläche 14 bis etwa zur Mitte der Vorderkante 20 des zweiten Hakenschenkels 3. Nach unten hin verläuft die Vorderkante 20 nach hinten, so daß das untere Ende 21 der Vorderkante 20 gegenüber dem unteren Ende 22 der Vorderkante 8 des ersten Hakenschenkels 2 nach hinten versetzt ist. Die Rückseite 23 des zweiten Hakenschenkels 3 verläuft von dem Hakenbogen 1 ausgehend nach unten und nach vome, wodurch auch das untere Ende der Rückseite 23 gegenüber dem unteren Ende der Rückseite des ersten Hakenschenkels 2 versetzt ist. Das untere Ende der Rückseite 23 ist gegenüber dem anderen unteren Ende der Rückseite des ersten Hakenschenkels 2 nach vorne versetzt. Eine Abschrägung 24 verläuft über die Breite des Hakenschenkels 3 im Bereich des unteren Endes 21 von der Innenseite 25 des Hakenschenkels 3 bis etwa zur Außenseite 19 des Hakenschenkels 3.

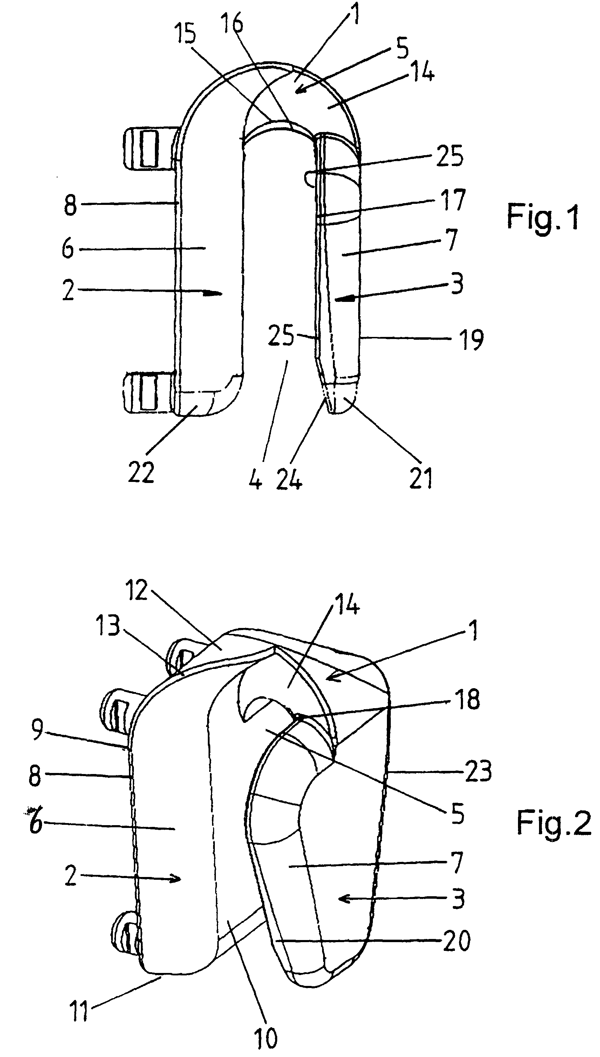

Das Hakenelement weist zum Befestigen an den Fahrradtaschen oder zum Anbringen von weiteren Teilen wie eine Sperrklinke Öffnungen und Bohrungen auf, welche in den Fig.1 und 2 nicht dargestellt sind.

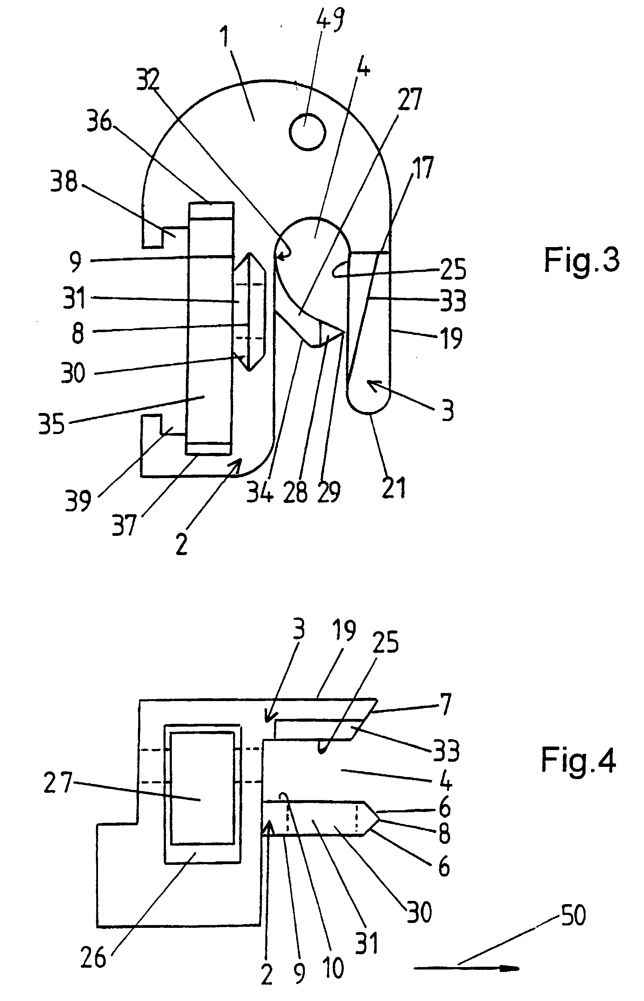

Bei dem in Fig. 3 dargestellten Ausführungsbeispiel ist im Hakenbogen 1 eine längliche Öffnung 26 vorgesehen, in der ein Sperriegel 27 eingesetzt ist. Zur drehbaren Befestigung des Sperriegels 27 ist in dem Hakenbogen 1 eine horizontale Bohrung 49 vorgesehen, in welche ein in der Zeichnung nicht dargestellter Stift eingesteckt ist, der sich in angebrachtem Zustand durch eine weitere Bohrung im Sperriegel 27 erstreckt. Der Sperriegel 27 ist federbelastet und weist einen pyramidenförmigen Riegelkopf 28 auf. In Ruhestellung oder verriegelter Stellung des Sperriegels 27 befindet sich der Riegelkopf 28 innerhalb des Schlitzes 4, wobei eine Spitze 29 des Riegelkopfes 28 an der Innenseite 25 des Hakenschenkels 3 anliegt. Die seitliche Ausnehmung 5 ist bei diesem Ausführungsbeispiel gegenüber dem Ausführungsbeispiel gemäß Fig. 1 derart vergrößert, daß sie sich im Bereich des ersten Hakenschenkels 2 nach unten bis etwa auf die Höhe der Oberkante 17 des zweiten Hakenschenkels 3 erstreckt. Der so gestaltete erste Hakenschenkel 2 erhält dadurch einen sich unterhalb und seitlich des Hakenbogens 1 befindlichen Schenkelabschnitt 30. In diesem Schenkelabschnitt 30 ist eine Öffnung 31 vorgesehen, welche beim Zusammenfügen von zwei Hakenelementen den Riegelkopf 28 des zweiten Hakenelementes aufnimmt. Damit das Zusammenfügen zweier Hakenelemente vereinfacht wird, verläuft die Anlaufschräge 7 im Gegensatz zu dem Ausführungsbeispiel gemäß Fig. 1 nun von der Außenseite 19 des Hakenschenkels 3 bis zur Innenseite 25 des Hakenschenkels 3. Die abgeschrägte Fläche der Anlaufschräge 7 zeigt also bei dem Hakenelement gemäß Fig.3 nach innen zum Schlitz 4 hin, während sie bei dem Hakenelement gemäß Fig.1 nach außen vom Schlitz 4 weg zeigt. Beim ersten Hakenschenkel 2 erstreckt sich die Anlaufschräge 6 von der Vorderkante 8 des Hakenschenkels 2 ausgehend sowohl zur Innenseite 10 als auch zur Außenseite 9 des Hakenschenkels 2, wodurch die Flächen der Anlaufschräge 6 nach innen zum Schlitz 4 hin und nach außen vom Schlitz 4 weg zeigen. Weiterhin ist die Vorderkante 8 des ersten Hakenschenkels 2 derart abgerundet, daß sie in Seitenansicht etwa halbkreisförmig ausgebildet ist, wodurch das Zusammenfügen zweier Hakenelemente, welcher beim Zusammenfügen mit einem Winkel bis zu 90° zueinander stehen können, erleichtert wird. Im ersten Hakenschenkel 2 setzt sich die längliche Öffnung 26 zur Aufnahme des Sperriegels 27 in Form einer Ausnehmung 32 fort. In dieser Ausnehmung 32 befindet sich der Sperriegel 27, wenn zum Verriegeln der Schenkelabschnitt 30 eines zweiten Hakenelementes in den Schlitz 4 eingeschoben wird. Damit jedoch der Sperriegel 27 der Steckbewegung des Schenkelabschnitts 30 ausweichen kann, ist an dem zweiten Hakenschenkel 3 an seiner Innenseite 25 eine zusätzliche Abschrägung 33 vorgesehen, welche der Öffnung 31 des ersten Hakenschenkels 2 etwa gegenüberliegend angeordnet ist. Die Abschrägung 33 erstreckt sich über die Innenseite 25. ausgehend von einem Bereich etwas oberhalb des unteren Endes 21 an der Innenseite, bis hin zur Oberkante 17 des zweiten Hakenschenkels 3 nahe der Außenseite 19 und zeigt mit ihrer Fläche zum Schlitz 4 hin. Beim Zusammenstecken und Lösen zweier Hakenelemente liegt dann der Sperriegel 27 des einen Hakenelementes zeitweise mit seiner Rückseite 34 an der Abschrägung 33 des zweiten Hakenelementes an.

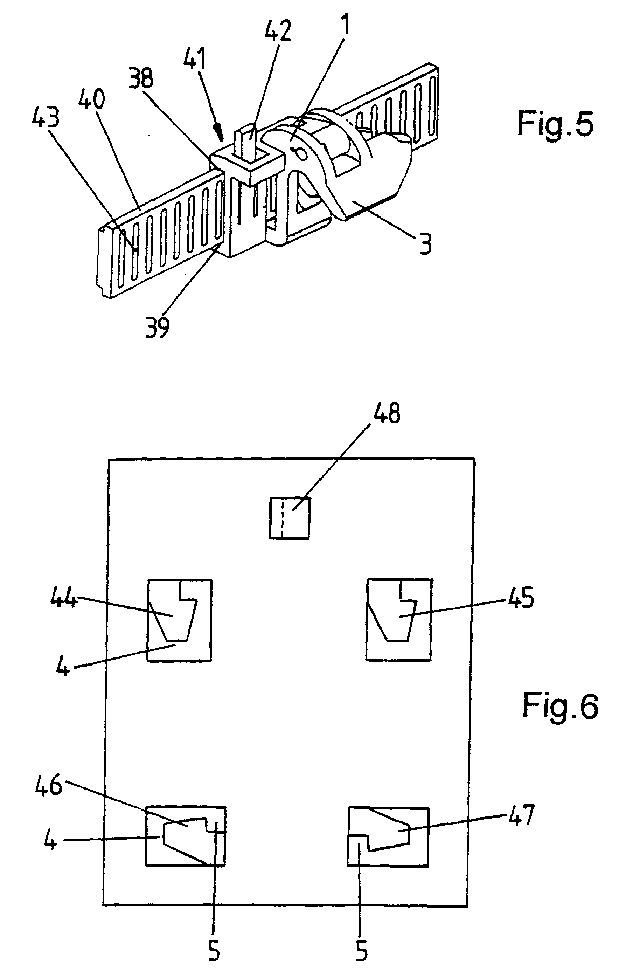

Für das Zusammenfügen zweier identischer Hakenelemente ist weiterhin im Bereich des ersten Hakenschenkels 2 eine Aufnahmeöffnung 35 vorgesehen, in welche beim Zusammenfügen der Hakenschenkel 3 des zweiten Hakenelementes eingesteckt wird. Die Aufnahmeöffnung 35 wird zum Schlitz 4 hin gesehen durch die Außenseite 9 begrenzt. Weiterhin weist die Aufnahmeöffnung 35 eine Oberseite 36 und eine Unterseite 37 auf, welche derart abgeschrägt sind, daß sie in Steckrichtung des zweiten Hakenelementes gesehen etwa konisch zusammenlaufen. Die in Fig.4 dargestellte Steckrichtung 50 ist die Steckrichtung des ersten Hakenelementes und somit der Steckrichtung des zweiten Hakenelementes entgegengesetzt. An die Oberseite 36 schließt sich seitlich nach außen hin eine Nut 38 an und an die Unterseite 37 schließt sich seitlich nach außen hin ebenfalls eine weitere Nut 39 an. Die Nuten 38 und 39 dienen zum Befestigen an einem Behältnis, wie in Fig. 5 dargestellt. Zum Befestigen wird das Hakenelement mittels der Nuten 38 und 39 auf eine abgestufte Schiene 40 aufgeschoben. In dem in Fig. 5 dargestellten Ausführungsbeispiel ist an dem Hakenelement zusätzlich eine Riegeleinheit 41 mit einem Riegel 42 angeordnet. Die Riegeleinheit 41 weist ebenfalls die Nuten 38 und 39 auf. Die Riegeleinheit kann einstückig mit dem Hakenelement ausgebildet sein, sie kann aber auch als separate Einheit an der Schiene 40 verschiebbar angeordnet sein. Zum Verriegeln weist die Schiene 40 Querrillen 43 auf. An dem Riegel 42 ist ein in der Zeichnung nicht näher dargestellter Vorsprung angeordnet, welcher beim Betätigen des Riegels 42 in die Querrillen 43 zum Verriegeln eingreift. Mittels der an dem Hakenelement vorgesehenen Nuten 38 und 39 kann nun das Hakenelement auf der Schiene 40 an eine beliebige Position geschoben werden und über die Riegeleinheit 41 fixiert werden.

Fig. 6 zeigt schematisch die Anordnung von insgesamt vier der erfindungsgemäßen Hakenelemente 44, 45, 46, 47 an der Seitenwand einer Fahrradtasche. Alle vier Hakenelemente sind gemäß dem Ausführungsbeispiel nach Fig.1 ausgebildet. Die Hakenelemente 44 und 45 sind nebeneinander und in gleicher Lage angeordnet. Darunter befinden sich zwei weitere Hakenelemente 46 und 47. Das Hakenelement 47 liegt dem Hakenelement 46 horizontal gegenüber, ist jedoch in seiner Lage gegenüber dem Hakenelement 46 um 180° gedreht, so daß die seitliche Ausnehmung 5 beim Hakenelement 47 nach unten zeigt, während die Ausnehmung 5 beim Hakenelement 46 nach oben zum Hakenelement 44 hin zeigt. Gegenüber dem Hakenelement 44 ist das Hakenelement 46 derart um 90° gedreht, daß der Schlitz 4 des Hakenelementes 46 nach außen hin offen ist, während er bei dem Hakenelement 44 nach unten offen ist. Zusätzlich ist das Hakenelement 46 gegenüber dem Hakenelement 44 spiegelsymmetrisch ausgebildet. Weist eine zweite Fahrradtasche eine identische Anordnung dieser Hakenelemente auf, so können diese beiden Fahrradtaschen über eine einfache Schwenkbewegung mittels der Hakenelemente verbunden werden. Hierzu wird das Hakenelement 47 der zweiten Fahrradtasche auf das Hakenelement 46 der ersten Fahrradtasche unter einem Winkel bis zu 90°, vorteilhafterweise 45°, aufgesetzt und anschließend wird die Schwenkbewegung so ausgeführt, daß sich nachfolgend das Hakenelement 47 der ersten Fahrradtasche mit dem Hakenelement 46 der zweiten Fahrradtasche, das Hakenelement 45 der ersten Fahrradtasche mit dem Hakenelement 44 der zweiten Fahrradtasche und zum Schluß das Hakenelement 44 der ersten Fahrradtasche mit dem Hakenelement 45 der zweiten Fahrradtasche verbindet. Da alle Hakenelemente keinen Sperriegel aufweisen, ist an den beiden Fahrradtaschen zusätzlich ein separater Verschluß 48 herkömmlicher Bauart vorgesehen.

Beim Zusammenfügen zweier Hakenelemente wird zuerst ein Hakenelement mit dem zweiten Hakenschenkel 3 etwa horizontal von vorne nach hinten in den Schlitz 4 des anderen Hakenelementes eingeführt. Durch die Anlaufschrägen 7 und 6 ergibt sich anfänglich ein großes Spiel beim Zusammenfügen, so daß insgesamt das Zusammenfügen vereinfacht ist, im Gegensatz zu den bekannten Hakenelementen, welche sehr präzise gegeneinander gesetzt und dann sorgfältig eingeführt werden mußten, damit kein Verhaken auftritt. Bei diesem erfindungsgemäßen Hakenelement wird nun ein derartiges Verhaken beim Zusammenfügen vermieden. Weiterhin ist es auch möglich, die erfindungsgemäßen Hakenelemente anfänglich unter einem Winkel von 90° zusammenzufügen. Hierzu werden die Hakenelemente so zusammengesetzt, daß die Stirnfläche 14 eines Hakenelementes auf der Oberseite 12 des anderen Hakenelementes ruht. Anschließend wird das eine Hakenelement um 90° nach unten gedreht, wobei diese Drehung durch die Abrundungen 16 und 18 erleichtert wird. Nach der 90°-Drehung liegt die Oberseite 12 jeweils eines Hakenelements an der Anlaufkante 13 des jeweils anderen Hakenelementes an. Damit sind die beiden Hakenelemente bündig zusammengefügt. Diese Bündigkeit ergibt sich auch beim normalen horizontalen Einschieben eines Hakenelementes in das andere Hakenelement.

Durch das erfindungsgemäße Hakenelement ist es nicht mehr erforderlich, daß bei der Herstellung von beispielsweise Fahrradtaschen die Hakenelemente jeweils immer an den gleichen Stellen angeordnet sind. Es sind nun größere Toleranzen möglich, welche eine einfachere Herstellung von Fahrradtaschen gestatten. Insgesamt wird das Zusammenfügen der Hakenelemente und damit der Fahrradtaschen durch die Erfindung erheblich erleichtert.

## Patentansprüche

1. Hakenelement zur lösbaren Verbindung von zwei Gegenständen miteinander mit einem ersten Hakenschenkel (2) und einem zweiten Hakenschenkel (3), welche über einen Hakenbogen (1) verbunden sind, wobei im Bereich des Hakenbogens (1) eine seitliche Ausnehmung (5) vorgesehen ist,
**dadurch gekennzeichnet,**
**daß** mindestens ein erster Hakenschenkel (2) eine Anlaufschräge (6) aufweist.

2. Hakenelement nach Anspruch 1,
**dadurch gekennzeichnet,**
**daß** sich die Anlaufschräge (6) an einer Vorderseite des mindestens einen Hakenschenkels (2) von einer Außenseite (9) bis zu einer Innenseite (10) des mindestens einen Hakenschenkels (2) erstreckt.

3. Hakenelement nach Anspruch 1 oder 2,
**dadurch gekennzeichnet,**
**daß** die Anlaufschräge (6) entlang einer Vorderkante (8) des Hakenschenkels (2) über die gesamte Länge des mindestens einen Hakenschenkels (2) verläuft.

4. Hakenelement nach einem der vorhergehenden Ansprüche,
**dadurch gekennzeichnet,**
**daß** der erste Hakenschenkel (2) und der zweite Hakenschenkel (3) je eine Anlaufschräge (6, 7) aufweisen.

5. Hakenelement nach einem der vorhergehenden Ansprüche,
**dadurch gekennzeichnet,**
**daß** an einer Unterkante (14) des Hakenbogens (1) eine Rundung (15) vorgesehen ist.

6. Hakenelement nach einem der vorhergehenden Ansprüche,
**dadurch gekennzeichnet,**
**daß** eine Oberkante (17) eines Hakenschenkels (3) im Bereich des Hakenbogens (1) eine Abrundung (18) aufweist.

7. Hakenelement nach einem der vorhergehenden Ansprüche,
**dadurch gekennzeichnet,**
**daß** die Ausnehmung (5) im Bereich des Hakenbogens (1) eine Anlaufkante (13) aufweist, welche sich von außen her bis zur Mitte des Hakenbogens (1) erstreckt.

8. Hakenelement nach einem der vorhergehenden Ansprüche,
**dadurch gekennzeichnet,**
**daß** an einem Hakenschenkel (2) zwei sich gegenüberliegende Nuten (38, 39) zum Befestigen des Hakenelementes an einem Behältnis vorgesehen sind.

9. Hakenelement nach einem der vorhergehenden Ansprüche,
**dadurch gekennzeichnet,**
**daß** an einem Hakenschenkel (2) eine Aufnahmeöffnung (35) zur Aufnahme eines Hakenschenkels (3) eines zweiten Hakenelementes vorgesehen ist.

10. Hakenelement nach Anspruch 9,
**dadurch gekennzeichnet,**
**daß** eine Oberseite (36) und eine Unterseite (37) der Aufnahmeöffnung (35) in Steckrichtung des Hakenschenkels (3) des zweiten Hakenelementes derart abgeschrägt sind, daß sie in Steckrichtung etwa konisch zusammenlaufen.

11. Hakenelement nach einem der vorhergehenden Ansprüche,
**dadurch gekennzeichnet,**
**daß** sich an dem zweiten Hakenschenkel (3) die Anlaufschräge (7) von einer Außenseite (19) des Hakenschenkels (3) bis zu seiner Innenseite (25) erstreckt.

12. Hakenelement nach einem der vorhergehenden Ansprüche,
**dadurch gekennzeichnet,**
**daß** sich an dem ersten Hakenschenkel (2) die Anlaufschräge (6) von einer Vorderkante (8) des ersten Hakenschenkels (2) ausgehend zur Innenseite (10) und zur Außenseite (9) des ersten Hakenschenkels (2) erstreckt.

13. Hakenelement nach Anspruch 12,
**dadurch gekennzeichnet,**
**daß** die Vorderkante (8) des ersten Hakenschenkels (2) abgerundet ist.

14. Hakenelement nach einem der vorhergehenden Ansprüche,
**dadurch gekennzeichnet,**
**daß** der erste Hakenschenkel (2) einen sich unterhalb und seitlich des Hakenbogens (1) befindlichen Schenkelabschnitt (30) aufweist, in welchem eine Öffnung (31) zur Aufnahme eines Riegelkopfes (28) eines Sperriegels (27) vorgesehen ist.

15. Hakenelement nach Anspruch 14,
**dadurch gekennzeichnet,**
**daß** der erste Hakenschenkel (2) eine Ausnehmung (32) zur Aufnahme des Sperriegels aufweist.

16. Hakenelement nach Anspruch 14 und 15,
**dadurch gekennzeichnet,**
**daß** der zweite Hakenschenkel (3) an seiner Innenseite (25) eine zusätzliche Abschrägung (33) aufweist, welche der Öffnung (31) des ersten Hakenschenkels (2) etwa gegenüberliegend angeordnet ist und von der Innenseite (25) bis zur Oberkante (17) des zweiten Hakenschenkels (3) verläuft.

17. Hakenelement nach einem der vorhergehenden Ansprüche,
**dadurch gekennzeichnet,**
**daß** der Riegelkopf (28) des Sperriegels (27) etwa pyramidenförmig abgeschrägt ist.

18. Hakenelement nach einem der vorhergehenden Ansprüche,
**dadurch gekennzeichnet,**
**daß** das Hakenelement (44) zusammen mit drei weiteren Hakenelementen (45, 46, 47) an einer Seitenwand eines Behältnisses angeordnet ist, wobei zwei Hakenelemente (44, 45) nebeneinander in gleicher Lage und zwei Hakenelemente (46, 47) sich gegenüberliegend und in ihrer Lage um 180° zueinander verdreht angeordnet sind.

## Claims

1. Hook element for the releasable connection of two objects to one another with a first hook shank (2) and a second hook shank (3), which are connected by way of a hook bow (1), a lateral recess (5) being provided in the region of the hook bow (1), **characterised in that** at least one hook shank (2) comprises an oblique contact face (6).

2. Hook element according to claim 1, **characterised in that** the oblique contact face (6) extends on a front side of the at least one hook shank (2) from an outer side (9) to an inner side (10) of the at least one hook shank (2).

3. Hook element according to claim 1 or 2, **characterised in that** the oblique contact face (6) extends along a front edge (8) of the hook shank (2) over the entire length of the at least one hook shank (2).

4. Hook element according to any one of the preceding claims, **characterised in that** the first hook shank (2) and the second hook shank (3) each comprise an oblique contact face (6, 7).

5. Hook element according to any one of the preceding claims, **characterised in that** a rounded part (15) is provided on a lower edge (14) of the hook bow (1).

6. Hook element according to any one of the preceding claims, **characterised in that** an upper edge (17) of a hook shank (3) comprises a rounded part (18) in the region of the hook bow (1).

7. Hook element according to any one of the preceding claims, **characterised in that** the recess (5) in the region of the hook bow (1) comprises a contact edge (13) extending from the outside to the middle of the hook bow (1).

8. Hook element according to any one of the preceding claims, **characterised in that** two mutually opposing grooves (38, 39) are provided on a hook shank (2) for fastening the hook element to a container.

9. Hook element according to any one of the preceding claims, **characterised in that** a receiving aperture (35) is provided on a hook shank (2) for receiving a hook shank (3) of a second hook element.

10. Hook element according to claim 9, **characterised in that** an upper side (36) and a lower side (37) of the receiving aperture (35) are bevelled in the insertion direction of the hook shank (3) of the second hook element in such a way that they converge approximately conically in the insertion direction.

11. Hook element according to any one of the preceding claims, **characterised in that** on the second hook shank (3) the oblique contact face (7) extends from an outer side (19) of the hook shank (3) to its inner side (25).

12. Hook element according to any one of the preceding claims, **characterised in that** on the first hook shank (2) the oblique contact face (6), starting from a front edge (8) of the first hook shank (2), extends to the inner side (10) and to the outer side (9) of the first hook shank (2).

13. Hook element according to claim 12, **characterised in that** the front edge (8) of the first hook shank (2) is rounded.

14. Hook element according to any one of the preceding claims, **characterised in that** the first hook shank (2) comprises a shank portion (30) located below and to the side of the hook bow (1) and in which an aperture (31) is provided for receiving a bolt head (28) of a locking bolt (27).

15. Hook element according to claim 14, **characterised in that** the first hook shank (2) comprises a recess (32) for receiving the locking bolt.

16. Hook element according to claim 14 and 15, **characterised in that** the second hook shank (3) comprises on its inner side (25) an additional bevel (33) arranged approximately opposing the aperture (31) of the first hook shank (2) and extending from the inner side (25) to the upper edge (17) of the second hook shank (3).

17. Hook element according to any one of the preceding claims, **characterised in that** the bolt head (28) of the locking bolt (27) is bevelled approximately in the shape of a pyramid.

18. Hook element according to any one of the preceding claims, **characterised in that** the hook element (44), together with three further hook elements (45, 46, 47), is arranged on a side wall of a container, two hook elements (44, 45) being arranged next to one another in the same position and two hook elements (46, 47) being arranged opposing one another and rotated in their position relative to one another by 180°.

## Revendications

1. Élément en forme de crochet pour assembler deux objets entre eux de façon détachable, avec une première branche de crochet (2) et une deuxième branche de crochet (3) qui sont reliés par un coude de crochet (1), un évidement latéral (5) étant prévu dans la région du coude de crochet (1), **caractérisé en ce qu'**au moins une première branche de crochet (2) présente un biais d'attaque (6).

2. Élément en forme de crochet selon la revendication 1, **caractérisé en ce que** le biais d'attaque (6) s'étend sur un côté avant de ladite au moins une branche de crochet (2), depuis un côté extérieur (9) jusqu'à un côté intérieur de ladite au moins une branche de crochet (2).

3. Élément en forme de crochet selon la revendication 1 ou 2, **caractérisé en ce que** le biais d'attaque (6) s'étend le long d'une arête avant (8) de la branche de crochet (2), sur toute la longueur de ladite au moins une branche de crochet (2).

4. Élément en forme de crochet selon l'une des revendications précédentes, **caractérisé en ce que** la première branche de crochet (2) et la deuxième branche de crochet (3) présentent chacune un biais d'attaque (6, 7).

5. Élément en forme de crochet selon l'une des revendications précédentes, **caractérisé en ce qu'**un arrondi (15) est prévu sur une arête inférieure (14) du coude de crochet (1).

6. Élément en forme de crochet selon l'une des revendications précédentes, **caractérisé en ce qu'**une arête supérieure (17) d'une branche de crochet (3) présente un arrondi (18) dans la région du coude de crochet (1).

7. Élément en forme de crochet selon l'une des revendications précédentes, **caractérisé en ce que** l'évidement (5) situé dans la région du coude de crochet (1) présente une arête d'attaque (13) qui s'étend depuis l'extérieur jusqu'au milieu du coude de crochet (1).

8. Élément en forme de crochet selon l'une des revendications précédentes, **caractérisé en ce que** deux rainures en vis-à-vis (38, 39) sont prévues sur une branche de crochet (2) afin de fixer l'élément en forme de crochet sur un contenant.

9. Élément en forme de crochet selon l'une des revendications précédentes, **caractérisé en ce qu'**une ouverture réceptrice (35) est prévue sur une branche de crochet (2) pour recevoir une branche de crochet (3) d'un deuxième élément en forme de crochet.

10. Élément en forme de crochet selon la revendication 9, **caractérisé en ce qu'**un côté supérieur (36) et un côté inférieur (37) de l'ouverture réceptrice (35) sont biaisés, dans la direction d'emboîtement de la branche de crochet (3) du deuxième élément en forme de crochet, de telle sorte qu'ils se rejoignent approximativement coniquement dans la direction d'emboîtement.

11. Élément en forme de crochet selon l'une des revendications précédentes, **caractérisé en ce que** le biais d'attaque (7) prévu sur la deuxième branche de crochet (3) s'étend depuis un côté extérieur (19) de la branche de crochet (3) jusqu'à son côté intérieur (25).

12. Élément en forme de crochet selon l'une des revendications précédentes, **caractérisé en ce que** le biais d'attaque (6) prévu sur la première branche de crochet (2) s'étend, depuis une arête avant (8) de la première branche de crochet (2), vers le côté intérieur (10) et vers le côté extérieur (9) de la première branche de crochet (2).

13. Élément en forme de crochet selon la revendication 12, **caractérisé en ce que** l'arête avant (8) de la première branche de crochet (2) est arrondie.

14. Élément en forme de crochet selon l'une des revendications précédentes, **caractérisé en ce que** la première branche de crochet (2) présente une partie de branche (30) se trouvant en dessous et sur le côté du coude de crochet (1), partie dans laquelle est prévue une ouverture (31) pour recevoir une tête de verrou (28) d'un verrou de sûreté (27).

15. Élément en forme de crochet selon la revendication 14, **caractérisé en ce que** la première branche de crochet (2) présente un évidement (32) pour recevoir le verrou de sûreté.

16. Élément en forme de crochet selon les revendications 14 et 15, **caractérisé en ce que** la deuxième branche de crochet (3) présente sur son côté intérieur (25) un biais supplémentaire (33), qui est disposé approximativement en vis-à-vis de l'ouverture (31) de la première branche de crochet (2) et qui s'étend depuis le côté intérieur (25) jusqu'à l'arête supérieure (17) de la deuxième branche de crochet (3).

17. Élément en forme de crochet selon l'une des revendications précédentes, **caractérisé en ce que** la tête de verrou (28) du verrou de sûreté (27) est biseautée approximativement en forme de pyramide.

18. Élément en forme de crochet selon l'une des revendications précédentes, **caractérisé en ce que** l'élément en forme de crochet (44) est disposé conjointement avec trois autres éléments en forme de crochet (45, 46, 47) sur une paroi latérale d'un contenant, deux éléments en forme de crochet (44, 45) étant disposés en étant juxtaposés dans la même position, et deux éléments en forme de crochet (46, 47) étant disposés en vis-à-vis et dans une position tournée à 180° l'un par rapport à l'autre.
